Europäisches Patentamt

European Patent Office

Office européen des brevets

(11) Veröffentlichungsnummer: **0 032 517**
**A1**

## (12) EUROPÄISCHE PATENTANMELDUNG

(21) Anmeldenummer: **80100228.8**

(22) Anmeldetag: **17.01.80**

(51) Int. Cl.³: **G 02 C 7/04**

(43) Veröffentlichungstag der Anmeldung: **29.07.81**
**Patentblatt 81/30**

(71) Anmelder: **Rauscher, Reinhold, Terlaner Strasse 19, D-8000 München 90 (DE)**

(72) Erfinder: **Rauscher, Reinhold, Terlaner Strasse 19, D-8000 München 90 (DE)**

(74) Vertreter: **Kirschner, Klaus D. et al, Patentanwälte Kirschner & Grosse Herzog-Wilhelm-Strasse 17, D-8000 München 2 (DE)**

(84) Benannte Vertragsstaaten: **AT BE CH DE FR GB IT LU NL SE**

(54) Kontaktlinse und Verfahren zu ihrer Herstellung.

㉗ Die Erfindung betrifft eine Kontaktlinse sowie ein Verfahren zu ihrer Herstellung. Die Kontaktlinse dient zur Korrektion von fehlsichtigen Augen, welche Unregelmäßigkeiten an der Hornhautvorderfläche aufweisen. Diese Unregelmäßigkeiten können z. B. durch Hornhautastigmatismus, Keratokonus und Hornhautnarben bedingt sein. Die Korrektion erfolgt dadurch, daß die Kontaktlinse im wesentlichen an derjenigen Stelle, welche sich über den optischen Teil der Hornhaut erstreckt, eine Kammer aufweist, welche allseits geschlossen ist und mit einem physiologisch verträglichen Medium gefüllt ist. Handelt es sich um eine weiche Kontaktlinse, dann kann anstelle der Kammer oder zusätzlich zur Kammer eine Einlage oder Auflage vorgesehen sein, welche zur Stabilisierung der extravertierten Fläche der Kontaktlinse dient, während die introvertierte Fläche sich den Hornhautvorderwandunregelmäßigkeiten anpassen kann. Das in der Kammer befindliche Medium, welches z. B. von Tränenflüssigkeit gebildet sein kann, gleicht die Unregelmäßigkeiten der Hornhautvorderfläche optisch aus, während der extravertierte Teil der Kontaktlinse infolge seiner regelmäßigen Oberfläche einen optisch einwandfreien Strahlengang ermöglicht.

ACTORUM AG

0032517

PATENTANWÄLTE

KLAUS D. KIRSCHNER
DIPL.-PHYSIKER

WOLFGANG GROSSE
DIPL.-INGENIEUR

ZUGELASSENE VERTRETER VOR DEM
EUROPAISCHEN PATENTAMT

HERZOG-WILHELM-STR. 17
D-8 MÜNCHEN 2

Reinhold Rauscher

Terlaner Straße 19
8000 München 90

IHR ZEICHEN:

YOUR REFERENCE:

UNSER ZEICHEN: R 3661 Gs/dp

OUR REFERENCE:

DATUM: 17. Januar 1980

## Kontaktlinse und Verfahren zu deren Herstellung

Die Erfindung betrifft eine Kontaktlinse sowie ein Verfahren zu deren Herstellung. Die Kontaktlinse dient zur optischen Korrektion von Fehlsichtigkeiten von Augen mit Unregelmäßigkeiten im Bereich der Hornhautvorderfläche wie Hornhautastigmatismus, Keratokonus und Hornhautnarben oder dergleichen.

Es ist bereits bekannt, Fehlsichtigkeiten von menschlichen Augen mit sogenannten harten oder weichen Kontaktlinsen auszugleichen, wobei es sich bei den Kontaktlinsen um eine sehr dünne Haftschale oder ein sehr dünnes Haftglas handelt, welches der Form des Augapfels angepaßt ist und direkt auf die Hornhautvorderfläche aufgesetzt wird. Je nach der Art der Fehlsichtigkeit wird nun die Kontaktlinse entsprechend bearbeitet, um die Brechungsfehler des optischen Systems des Auges auszugleichen. Es wird angestrebt, daß die Kontaktlinse mit der sphärischen Innenfläche auf der Hornhaut des Auges aufliegt, da hierdurch in Verbindung
mit der optischen Wirkung der Kontaktlinse die nahezu vollständige Korrektion einer Fehlsichtigkeit erzielbar ist.

Bei der Korrektion von fehlsichtigen Augen mit Unregelmäßigkeiten im Bereich der Hornhautvorderfläche unter Verwendung von
Kontaktlinsen treten allerdings Schwierigkeiten auf. Besitzt die
Hornhaut an ihrer außen liegenden Vorderseite z.B. eine Narbe
oder krankhafte Veränderung, dann neigt die weiche Kontaktlinse,
die je nach optischer Wirkung eine Mittendicke von 2 - 10 Hundertstel Millimeter aufweist, infolge ungenügender Eigenstabilität dazu, sich dieser Narbe oder Veränderung anzupassen, so daß
die Hornhautunregelmäßigkeit durch die Kontaktlinse nicht ausgeglichen wird und der Hornhautfehler optisch unkorrigiert
bleibt. Die harte Kontaktlinse legt sich dagegen nicht an die
durch eine Narbe oder eine Erhebung unregelmäßige Hornhaut an,
so daß die Hornhautunregelmäßigkeit hier ausgeglichen wird.

Die Verwendung von weichen Kontaktlinsen wird jedoch wegen der
besseren Anpassungsfähigkeit an die Hornhautvorderfläche und der
angenehmeren Eigenschaften beim Tragen der Verwendung von harten
Kontaktlinsen vorgezogen. Die harte Kontaktlinse wirkt im Auge
eher als Fremdkörper, so daß das Auge weit stärker verschiedenen
Irritationen unterworfen ist als bei weichen Kontaktlinsen.

Der Erfindung liegt die Aufgabe zugrunde, eine Kontaktlinse der
eingangs genannten Art zu schaffen, mittels welcher auch die
Hornhautunregelmäßigkeiten eines fehlsichtigen Auges gleichzeitig mit der Fehlsichtigkeit optisch korrigiert werden können, und
welche die angenehmen Eigenschaften einer weichen Kontaktlinse
beim Tragen aufweist, sowie ein Verfahren zur Herstellung dieser
Kontaktlinse.

Gemäß der Erfindung wird eine Kontaktlinse vorgeschlagen, welche wenigstens in der Optik mit einer Einrichtung versehen ist, welche eine unabhängige Formgebung der introvertierten Fläche von der extravertierten Fläche der Kontaktlinse zuläßt. Hierdurch wird es in vorteilhafter Weise ermöglicht, daß sich die Kontaktlinse mit ihrer introvertierten Fläche an die Hornhautunregelmäßigkeit anpaßt, während die extravertierte Fläche die sphärische Form beibehält. Die Kontaktlinse ist darüber hinaus an ihrer Innenseite zumindestens bereichsweise weich, während die Außenseite eine Formstabilität aufweist. Das Tragen der erfindungsgemäßen Kontaktlinse ist deshalb angenehm.

Die Einrichtung kann von einer sich wenigstens in der Optik der Kontaktlinse befindlichen Kammer gebildet sein, die z.B. von Vollmaterial gebildet ist, welches in seinem Querschnitt in Richtung der optischen Achse, vorzugsweise von innen nach außen, eine zunehmende Härte aufweist, oder deren innere Wandung die introvertierte Fläche der Kontaktlinse bildet und aus einer elastischen Membran besteht. Dabei kann letztere Kammer vorzugsweise von einer Hohlkammer gebildet sein, die mit einem physiologisch verträglichen Medium gefüllt ist, wie z.B. Tränenflüssigkeit oder ein anderes physiologisch einwandfreies flüssiges oder halbflüssiges Medium. Der direkt auf der Hornhaut aufliegende Teil der Kontaktlinse schmiegt sich der unregelmäßigen Hornhautvorderfläche teilweise oder ganz an, wobei das sich in der Hohlkammer befindliche Medium die Unregelmäßigkeit der Cornea optisch nahezu vollkommen ausgleicht und den durch die Unregelmäßigkeit bedingten Fehler optisch aufhebt. Der äußere, extravertierte Teil der Kontaktlinse ermöglicht durch seine regelmäßige sphärische Oberfläche einen optisch einwandfreien Strahlengang.

Die Hohlkammer kann entweder die ganze Kontaktlinse durchgreifen, so daß die Wandungen der Hohlkammer der introvertierten bzw. extravertierten Fläche der Kontaktlinse entsprechen, oder die Hohlkammer kann auch auf den inneren Teil der Kontaktlinse aufgesetzt sein, so daß die äußere Wandung der Hohlkammer durch
die Kontaktlinsenoptik stabilisiert wird. Schließlich ist es
auch denkbar, daß bei einer weichen Kontaktlinse zur Stabilisierung des extravertierten Teiles der Kontaktlinse eine Ein-
und/oder Auflage vorgesehen ist, die z.B. von einer ring-,
kreis- oder sternförmigen Schablone aus Glasfasern, Kunststoffen,
Metallen oder Lacken bestehen kann. Es ist natürlich auch in
weiterer vorteilhafter Ausgestaltung des Gegenstandes der Erfindung denkbar, daß die extravertierte Wandung der Hohlkammer
durch entsprechende Ein- und/oder Auflagen stabilisiert ist, so
daß sich stets der introvertierte Teil der Kontaktlinse den Unregelmäßigkeiten der Cornea anpassen kann, während der extravertierte Teil seine sphärische Form beibehält.

Auf diese Weise wird der unregelmäßige optische Anteil der
Cornea vom introvertierten Teil der erfindungsgemäßen Kontaktlinse sowie von dem sich in der Hohlkammer befindlichen Medium
aufgenommen und kompensiert, während der regelmäßige Anteil der
Fehlsichtigkeit (Kurz- oder Übersichtigkeit) teils vom Medium
und teils vom extravertierten Teil korrigiert wird.

Zur Herstellung der erfindungsgemäßen Kontaktlinse können die
mit dem Medium füllbare Hohlkammer und/oder die stabilisierenden
Ein- und/oder Auflagen vor der Bearbeitung der Kontaktlinse in
das Kontaktlinsenmaterial ein- und/oder aufgebracht werden. Ein
Verlust des Mediums oder ein Auffüllen der Hohlkammer kann in
einem Behandlungsbad unter Anwendung eines osmotischen Druckes
erfolgen. Aus dem trockenen Rohmaterial kann dann die Kontaktlinse herausgedreht werden.

Gemäß einem weiteren vorteilhaften Merkmal der Erfindung
kann die Kontaktlinse auch mittels des an sich be-kannten Rotationsverfahrens gegossen werden, wobei die Kammer
als gefüllte Kapsel oder Vollmaterialkapsel eingegossen wird,
oder wobei ein Kern eingegossen und anschließend gegebenenfalls
durch das Kontaktlinsenmaterial hindurch wieder herausgelöst
wird, um die Hohlkammer zu bilden.

Weitere Merkmale, Einzelheiten und Vorteile der Erfindung ergeben
sich aus der folgenden Beschreibung von bevorzugten Ausführungsbeispielen anhand der Zeichnungen. Darin zeigen:

Figur 1     einen Querschnitt durch den vorderen Teil des Augapfels
            eines menschlichen Auges;

Figuren 2 - 5  Querschnitte durch verschiedene Ausführungsbeispiele der erfindungsgemäßen Kontaktlinse;

Figur 6     verschiedene Ausführungsbeispiele für die Ausbildung
            und Anordnung der Ein- bzw. Auflagen; und

Figur 7     Teilausschnitte einer herkömmlichen weichen und einer
            erfindungsgemäßen Kontaktlinse.

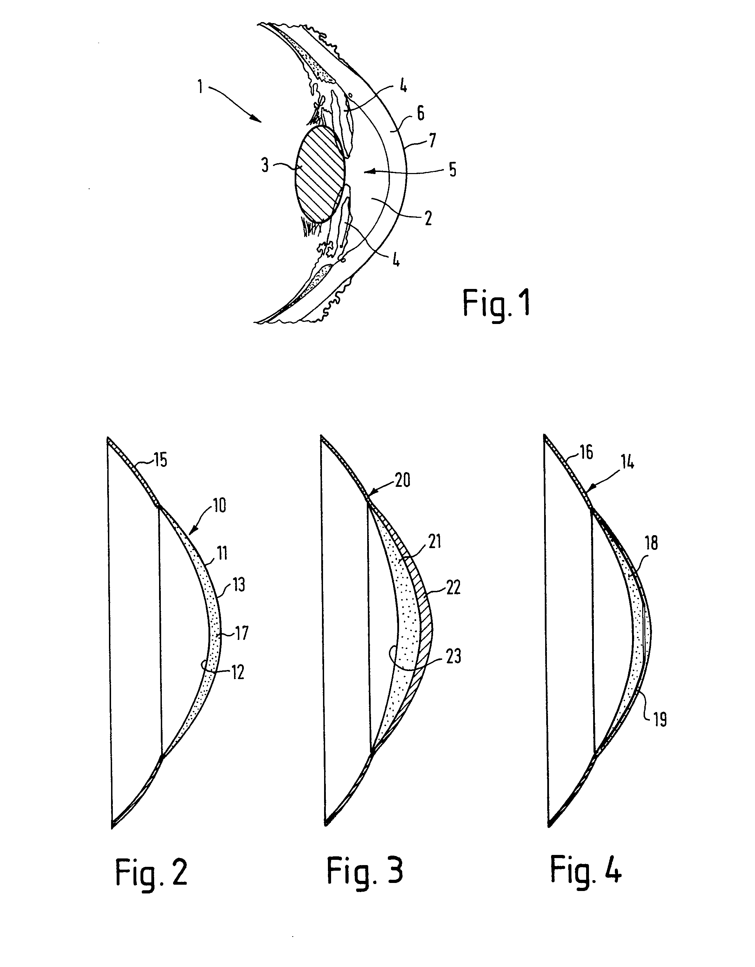

In der Figur 1 ist der vordere Teil des Augapfels 1 eines
menschlichen Auges in vergrößertem Maßstab im Querschnitt gezeigt. Die vordere Augenkammer 2 wird nach hinten durch die Linse
3 und die ringförmige Iris 4 begrenzt, welche die Pupille 5 umschließt. Nach vorn wird die vordere Augenkammer 2 durch die
Hornhaut oder Cornea 6 abgeschlossen. Bei dem dargestellten Auge
besitzt die Hornhaut 6 eine normale Krümmung und an der Hornhautvorderfläche 7 keine Unregelmäßigkeiten, so daß eine Kontaktlinse derart angepaßt werden kann, daß sie mit ihrer introvertierten Fläche plan auf die Hornhautvorderfläche 7 aufliegt.

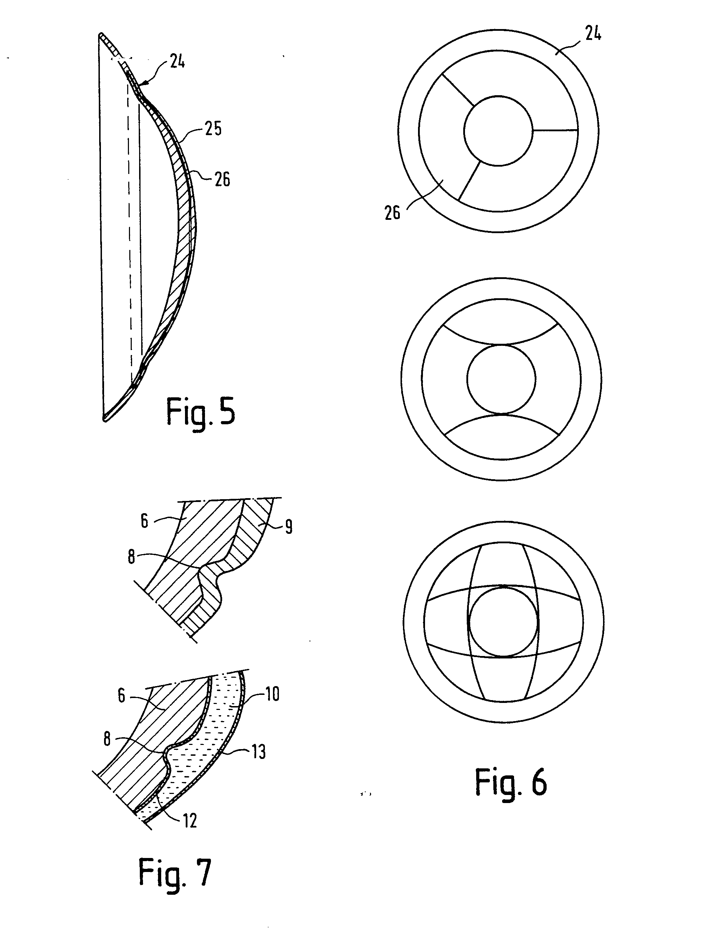

Wenn allerdings diese Hornhautvorderfläche 7 Unregelmäßigkeiten
aufweist, die z.B. durch Hornhautastigmatismus, Keratokonus und
Hornhautnarben oder dergleichen bedingt sein können, dann kann eine harte Kontaktlinse derart bearbeitet werden, daß sie plan auf der Hornhautvorderfläche 7 aufliegt. Allerdings bewirken die harte Innenseite und der harte Rand der Kontaktlinse wesentlich größere Irritationen des Auges als die weichen Kontaktlinsen, welche sich eng an diese Unregelmäßigkeiten anpassen. Die weiche Kontaktlinse hat allerdings den Nachteil, daß an der extravertierten Fläche der Kontaktlinse ein unregelmäßiger Strahlengang bewirkt wird. Dies ist in Gegenüberstellung von einer herkömmlichen weichen Kontaktlinse und der erfindungsgemäßen Kontaktlinse in Figur 7 gezeigt, wobei der vergrößerte Hornhautausschnitt 6 an der Stelle 8 eine Unregelmäßigkeit besitzt, an welche sich die weiche Kontaktlinse 9 herkömmlicher Art anschmiegt, so daß die auf die Außenseite der Kontaktlinse 9 auftreffenden Lichtstrahlen ungleichmäßig gebrochen werden.

Zur Vermeidung der vorbeschriebenen Nachteile einerseits der harten und andererseits der weichen Kontaktlinse werden nun gemäß der Erfindung Kontaktlinsen 10 vorgeschlagen, welche eine Einrichtung 11 aufweisen, die eine unabhängige Formgebung der introvertierten Fläche 12 von der extravertierten Fläche 13 (siehe Fig. 7) zuläßt. Damit ist die erfindungsgemäße Kontaktlinse geeignet, Unregelmäßigkeiten 8 in der Hornhautvorderfläche 7 auszugleichen, indem sich der introvertierte weiche Teil der erfindungsgemäßen Kontaktlinseneinrichtung an die Unregelmäßigkeit anschmiegt, während der extravertierte stabilisierte Teil durch seine regelmäßige Oberfläche einen optisch einwandfreien Strahlengang ermöglicht.

Bei dem in den Figuren 2 und 4 gezeigten Ausführungsbeispiel besteht die Kontaktlinse 10 bzw. 14 aus zwei Teilen, nämlich der Haptik 15, 16 und der Optik 17 bzw. 18. Die Haptik 15 bzw. 16 sorgt für die Haftung der Kontaktlinse auf dem Augapfel, während die Optik 17 bzw. 18 den eigentlichen abbildenden Teil der Kontaktlinse darstellt. Bei den gezeigten Ausführungsbeispielen ist die Optik 17 bzw. 18 von einer Hohlkammer gebildet, die mit einem physiologisch verträglichen Medium, z.B. Tränenflüssigkeit, gefüllt ist.

Bei dem in der Figur 4 dargestellten Ausführungsbeispiel ist die extravertierte Wandung der Hohlkammer 18 durch eine Einlage 19 stabilisiert, welche die in der Figur 6 gezeigten Formen besitzen kann. Wird die Kontaktlinse im Rotationsverfahren hergestellt, dann kann die Kammer gleichzeitig eingegossen werden.

Bei der in der Figur 3 gezeigten Kontaktlinse 20 ist die Hohlkammer 21 auf die Innenseite der Optik 22 der Kontaktlinse 20 aufgesetzt. Es ist allerdings auch denkbar, daß die Hohlkammer wie bei dem Ausführungsbeispiel nach Fig. 2 in die Haptik eingeschweißt oder eingeklebt ist und eine verstärkte Außenwandung besitzt, so daß diese eine gewisse Eigenstabilität aufweist und sich nur die introvertierte Wandung 23 der Hornhautunregelmäßigkeit anpaßt.

Das in der Figur 5 gezeigte Ausführungsbeispiel stellt eine weiche Kontaktlinse 24 dar, deren extravertierte Fläche 25 durch eine Einlage 26 stabilisiert ist. Eine solche Einlage oder Auflage kann z.B. ringförmig, kreis- oder sternförmig ausgebildet sein, wie dies in der Figur 6 schematisch dargestellt ist. Die stabilisierenden Einlagen können in das Kontaktlinsenmaterial eingebracht oder aufgebracht oder eventuell auch aufgespritzt werden. Sie können von der Haptik ausgehend bis in den optischen Teil der Kontaktlinse hineingreifen.

Bezugszeichenliste zu R 3661

| | |
|---|---|
| 1 | Augapfel |
| 2 | vordere Augenkammer |
| 3 | Linse |
| 4 | Iris |
| 5 | Pupille |
| 6 | Hornhaut, Cornea |
| 7 | Hornhautvorderfläche |
| 8 | Unregelmäßigkeit |
| 9 | weiche Kontaktlinse herkömmlicher Art |
| 10 | Kontaktlinse |
| 11 | Einrichtung |
| 12 | introvertierte Fläche |
| 13 | extravertierte Fläche |
| 14 | Kontaktlinse |
| 15, 16 | Haptik |
| 17, 18 | Optik, Hohlkammer |
| 19 | Einlage |
| 20 | Kontaktlinse |
| 21 | Hohlkammer |
| 22 | Optik |
| 23 | introvertierte Wandung |
| 24 | weiche Kontaktlinse |
| 25 | extravertierte Fläche |
| 26 | Einlage |

PATENTANWÄLTE

KLAUS D. KIRSCHNER
DIPL.-PHYSIKER

WOLFGANG GROSSE
DIPL.-INGENIEUR

ZUGELASSENE VERTRETER VOR DEM
EUROPAISCHEN PATENTAMT

HERZOG-WILHELM-STR. 17
D-8 MÜNCHEN 2

IHR ZEICHEN:
YOUR REFERENCE:

UNSER ZEICHEN: R 3661 Gs/dp
OUR REFERENCE:

Reinhold Rauscher
Terlaner Straße 19
8000 München 90

DATUM: 17. Januar 1980

## Ansprüche

1.  Kontaktlinse zur optischen Korrektion von Fehlsichtigkeiten von Augen mit Unregelmäßigkeiten im Bereich der Hornhautvorderfläche wie Hornhautastigmatismus, Keratokonus und Hornhautnarben oder dergleichen,

d a d u r c h   g e k e n n z e i c h n e t , daß die Kontaktlinse (10, 14, 20, 24) wenigstens in der Optik mit einer Einrichtung (11, 17, 18, 19, 26) versehen ist, welche eine unabhängige Formgebung der introvertierten Fläche (12, 23) von der extravertierten Fläche (13) der Kontaktlinse zuläßt.

2.  Kontaktlinse nach Anspruch 1, dadurch gekennzeichnet, daß die Kontaktlinse (10, 14, 20) wenigstens in der Optik eine Kammer (17, 18, 21) aufweist.

3.  Kontaktlinse nach Anspruch 2, dadurch gekennzeichnet, daß die Kammer von Vollmaterial gebildet ist, welches über seinem Querschnitt in Richtung der optischen Achse eine zunehmende Härte aufweist.

- 2 -

4.     Kontaktlinse nach Anspruch 2, dadurch gekennzeichnet, daß die Kammer (17, 18, 21) eine Hohlkammer ist, die mit einer physiologisch verträglichen Flüssigkeit gefüllt ist.

5.     Kontaktlinse nach Anspruch 2 oder 4, dadurch gekennzeichnet, daß die innere Wandung der Kammer (17, 18, 21) die introvertierte Fläche der Kontaktlinse bildet und von einer elastischen Membran gebildet ist.

6.     Kontaktlinse nach Anspruch 1, dadurch gekennzeichnet, daß die Kontaktlinse eine weiche Kontaktlinse (24) ist, die im Bereich der extravertierten Fläche eine stabilisierende Ein- und/oder Auflage (26) aufweist.

7.     Kontaktlinse nach einem der Ansprüche 2 oder 4, dadurch gekennzeichnet, daß die Wandungen der Kammer (17, 18) die introvertierte (12) bzw. die extravertierte (13) Fläche der Kontaktlinse bilden und von elastischen Membranen gebildet sind.

8.     Kontaktlinse nach einem der Ansprüche 2 bis 5 oder 7, dadurch gekennzeichnet, daß die Kammer (17, 18, 21) an ihrem Rand mit der Haptik (15, 16) der Flanke verschweißt oder verklebt ist.

9.     Kontaktlinse nach einem der Ansprüche 2 bis 5 oder 7, dadurch gekennzeichnet, daß die Kammer in das Kontaktlinsenmaterial eingegossen ist.

10.    Kontaktlinse nach einem der Ansprüche 2 bis 5, 7 bis 9, dadurch gekennzeichnet, daß die extravertierte Wandung der Kammer (18) durch eine Ein- und/oder Auflage (19) formstabilisiert ist.

11. Kontaktlinse nach einem der Ansprüche 4, 5, 7 bis 10, dadurch gekennzeichnet, daß die Wandungen der Kammer (21) eine unterschiedliche Wandstärke aufweisen und mechanisch bearbeitbar sind.

12. Kontaktlinse nach Anspruch 11, dadurch gekennzeichnet, daß wenigstens die äußere Wandung im optischen Teil eine Korrektionsmöglichkeit aufweist.

13. Kontaktlinse nach einem der Ansprüche 2 bis 12, dadurch gekennzeichnet, daß wenigstens die Kammer sauerstoffdurchlässig ist.

14. Kontaktlinse nach Anspruch 7 oder 10, dadurch gekennzeichnet, daß die stabilisierenden Ein- und/oder Auflagen (19, 26) aus Glasfasern, Kunststoffen, Metallen und/oder Lacken bestehen.

15. Verfahren zur Herstellung einer Kontaktlinse nach einem der Ansprüche 1 bis 14, dadurch gekennzeichnet, daß die Kammer und/oder die stabilisierenden Ein- und/oder Auflagen vor der Bearbeitung der Kontaktlinse in das Kontaktlinsenrohmaterial ein- und/oder aufgebracht werden.

16. Verfahren nach Anspruch 15, dadurch gekennzeichnet, daß die Kontaktlinse im trockenen Zustand aus dem Kontaktlinsenrohmaterial herausgedreht wird.

17. Verfahren zur Herstellung einer Kontaktlinse nach einem der Ansprüche 1 bis 14, dadurch gekennzeichnet, daß die Kontaktlinse im Rotationsverfahren gegossen wird.

18. Verfahren nach Anspruch 17, dadurch gekennzeichnet, daß die Kammer in die Kontaktlinse eingegossen wird.

- 4 -

19.    Verfahren nach Anspruch 17, dadurch gekennzeichnet, daß
in die Kontaktlinse ein Kern eingegossen wird, der nach Fertigstellung der Linse aus dem Linsenmaterial chemisch herausgelöst wird.

20.    Verfahren nach einem der Ansprüche 15 bis 19, dadurch
gekennzeichnet, daß die Kammer nach der Bearbeitung der Kontaktlinse durch osmotischen Druck mit einer physiologisch verträglichen Flüssigkeit gefüllt wird.

Fig. 1

Fig. 2

Fig. 3

Fig. 4

Fig. 5

Fig. 7

Fig. 6

**Europäisches Patentamt**

## EUROPÄISCHER RECHERCHENBERICHT

Nummer der Anmeldung

EP 80 10 0228

| Kategorie | EINSCHLÄGIGE DOKUMENTE | | KLASSIFIKATION DER ANMELDUNG (Int.Cl. 3) |
|---|---|---|---|
| | Kennzeichnung des Dokuments mit Angabe, soweit erforderlich, der maßgeblichen Teile | betrifft Anspruch | |
| | <u>FR - A - 2 188 186</u> (RICHARD ALAIN) <br> * Seite 1 * <br><br> ----- | 1,2,3, 4,5 | G 02 C 7/04 |

**RECHERCHIERTE SACHGEBIETE (Int. Cl. 3)**

G 02 C 7/04
B 29 D 11/02

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 08-09-1980 | TREVETIN |

EPA form 1503.1 06.78